# EUROPEAN PATENT APPLICATION

(11) **EP 4 727 032 A2**
(43) Date of publication of application: **15.04.2026**
(21) Application number: 25207967.8
(22) Date of filing: 10.10.2025
(51) Int. Cl.: H04B 7/185

(54) **DRONE OPERATIONS**

(30) Priority: 10.10.2024 GB 202414929
(71) Applicant: Vodafone Group Services Limited, Newbury RG14 2FN (GB)
(72) Inventor: GABRIEL, Sami, London, W2 6BY (GB)
(74) Representative: Boult Wade Tennant LLP

(57) **Abstract**

A method of identifying a drone operating via a mobile telecommunications network. The method comprises determining the number of simultaneous direct connections between a mobile telecommunication device and different network transceivers. The determined number of connections is compared with a threshold number of direct connections. If the determined number of number of connections is found to be greater than the threshold number of direct connections, the method comprises identifying the mobile telecommunication device as a potential drone.

## Description

### FIELD OF INVENTION

This disclosure relates to monitoring drone operations and, in particular, to identifying unauthorised drone use.

### BACKGROUND OF THE INVENTION

Drones may be operated using handsets or dedicated controllers that are connected to the drones using a mobile telecommunications network. Each drone and handset or controller is provided with a SIM card issued by a telecommunications network provider that allows communication between the handset or controller and the drone over the network. The network allocates a predetermined bandwidth to allow for command and control of the drone.

The use of a telecommunications network allows operation of the drone far from the operator, for example where the drone is well out of visual range of the operator. Such distant operation is allowed although, in most jurisdictions, only within well defined rules of operation. Unauthorised operation of drones outside of these rules of operation can lead to dangerous situations.

Hence, there is a need to monitor for unauthorised operation of drones. To date, this has been performed for specific locations, such as around airports. Aside from visual and radar observation, detection can also make use of eavesdropping on radio traffic at the location which can be targeted as drones communicate using defined frequency channels. While such techniques are useful, they are limited to localised deployment only. A technique allowing detection of unauthorised operation of drones over a far wider area would be of great benefit.

There is also a more general need for monitoring authorised drone operations. For example, such monitoring may be used to record total flying times and locations where drones are operated. This may be used a check that operation of the drone remains within allowed limits or to allow a drone operator to be charged for use of their drone. Charges may be made according to the time or distance over which the drone is operated, or for flying at certain locations.

### SUMMARY

The present invention resides in a method of identifying a drone operating via a mobile telecommunications network. The method comprises determining the number of simultaneous direct connections between a mobile telecommunication device and different network transceivers such as base stations (e.g. terrestrial base stations, including fixed ground stations and mobile stations such as drones) or satellites (e.g. low earth orbit constellations). The connections may be simultaneous to the extent that the mobile telecommunication device maintains direct communication with the network transceivers over a period of time, rather than having to communicate with the network transceivers at exactly the same time. For example, the mobile telecommunication device may communicate with the network transceivers sequentially over and over, and this is to be considered as simultaneous communication. Any network transceiver with which the mobile telecommunication device maintains an active link may be considered as contributing to the number of simultaneous direct connections.

The determined number of connections is compared with a threshold number of connections. If the determined number of direct connections is found to be greater than the threshold number of connections, the mobile telecommunication device is identified as a potential drone. If the number of connections is found to be less than the threshold number of connections, the mobile telecommunication device can be ruled out as a potential drone. The test to see If the determined number of connections is greater than the threshold number of connections may be performed directly or indirectly. For example, a computer program may perform a direct *greater than* test or may be performed to perform an indirect *greater than or equal* to test. Both are considered to be encompassed within the meaning of the claims.

Hence, an easily implemented method is provided to indicate the operation of a potential drone. A simple test is performed to determine the number of network transceivers connected to the mobile telecommunication device. A drone in flight will be clear of obstructions on the ground that limit the number of connections a mobile telecommunication device can make with network transceivers. Thus, the number of simultaneous direct connections is expected to be greater for a drone in flight than for a mobile telecommunication device on the ground. This provides a convenient signature to indicate the potential operation of a drone.

The threshold number of direct connections may correspond to the number of direct connections expected for a connected mobile telecommunication device in flight. For example, the threshold number of direct connections may be any of 10, 15 or 20 where the network transceivers are (terrestrial) base stations or may be any of 3, 4 or 5 where the network transceivers are satellites.

The method of identifying a potential drone may be further refined, as follows.

The method may further comprise monitoring the direct connections of the potential drone to determine a connection time over which the number of direct connections remains greater than the threshold number of direct connections. The determined connection time may be compared with a threshold connection time. If the determined connection time is greater than the threshold connection time, the identification of the mobile telecommunication device as a potential drone may be confirmed. If the determined connection time is less than the threshold connection time, the mobile telecommunication device can be ruled out as a potential drone. The threshold connection time may be any of 2 minutes, 5 minutes or 10 minutes.

Also, the method may further comprise tracking the potential drone to determine a location and path of the potential drone. The determined path may be compared with information recording known ground routes at the location of the potential drone to determine if the determined path follows one or more of the ground routes. If it is determined that the path does not follow one or more of the ground routes, the identification of the mobile telecommunication device as a potential drone may be confirmed. However, if it is determined that the path follows one or more of the ground routes, then the mobile telecommunication device is assumed to be moving along or close to the ground. Consequently, the mobile telecommunication device can be ruled out as a potential drone or the confidence in the identification as a drone may be lowered (for example, it may be a drone being flown close to the ground to avoid detection. The location may correspond to the region or area in which the potential drone is operating. The ground routes may include roads (including highways, motorways, streets, etc.), footpaths (including all publicly accessible paths such as trails, bridlepaths, byways, etc.) and navigable waterways (including canals, rivers, lakes, etc.). Tracking the potential drone comprise determining successive positions of the potential drone. The successive positions may be determined from triangulation, for example by triangulation from the network transceivers using measurable properties such as signal strength. The tracking may be performed for a minimum period of time such as 5 minutes and for up to 30 minutes (or more), such that the comparison may see a flight path lasting at least 5 minutes compared to the known ground routes.

The method may comprise multiple steps of determining the number of simultaneous direct connections between the mobile telecommunication device and different network transceivers, and comparing the determined number of connections with a threshold number of connections. If the determined number of number of direct connections is found to be less than that a further threshold number of direct connections at an earlier time and more than the threshold number of direct connections at a later time, the mobile telecommunication device may be identified as a potential drone. This corresponds to detecting a drone being on the ground before taking off. The drone will be switched on whilst on the ground and will establish a network connection before take off. Hence, the initial connection will be made to a relatively small number of network transceivers due to ground clutter: as the drone takes to the sky, it will climb above the ground clutter and the number of simultaneous direct connections to network transceivers will increase to a relatively large number. The relatively low number of connections expected for a mobile telecommunication device on the ground may be 3 to 5. Hence, the further threshold may be a smaller number than the threshold, for example 5, 7 or 10 as compared to 10, 15 or 20. Alternatively, the threshold and further threshold may be set to be the same number.

The method may further comprise determining the identity of the potential drone from the potential drone's connection with the network. Registered user information associated with the determined identity may be gathered and a report provided that contains the registered user information associated with the determined identity. The report may be provided to an interested party, for example a party responsible for charging operators for the use of their drones or for enforcing the rules governing operation of drones. The registered user information may be used to determine if the registered user is authorised to conduct drone operations. If the registered user is not authorised to conduct drone operations, the method may comprise providing the report containing the registered user information associated with the determined identity. If the registered user is authorised to conduct drone operations, the method may omit sending the report.

The identity may be the SIM identity of the SIM card carried by potential drone.

The method may further comprise searching records for network connection information associated with the determined identity, wherein the network connection information includes times and locations when potential drone previously connected to a telecommunications network. Then, the records may be searched for network connection information associated with another identity indicating that a mobile telecommunication device associated with the another identity was connected to the telecommunications network at at least some of the same times and locations as when the potential drone was previously connected to the telecommunications network. Then, the method may comprise gathering registered user information associated with the another identity. Providing the report may then comprise providing the report containing the registered user information associated with the determined identity and also the registered user information associated with the another user.

The method may further comprise adding the tracking information relating to the potential drone to the report and providing the report that includes the tracking information. The method may further comprise providing updated reports, for example updated reports containing updated tracking information.

Any of the above methods may be computer-implemented methods. The present invention also resides in a computer program comprising computer program instructions that, when executed by a computer system, cause the computer system to perform any of the methods described above, and in a computer readable medium having stored thereon such a computer program. The present invention also resides in a computer system programmed to perform any of the methods described above, and in a telecommunications network comprising such a computer system. The telecommunications network may also comprise the network transceivers to which the mobile telecommunication device connects.

### LIST OF FIGURES

In order that the invention can be more readily understood, reference will now be made by way of example only, to the accompanying drawings in which:
Figure 1 is a schematic representation of a method of identifying and reporting on operation of a drone;
Figure 2 is a schematic representation of a method of identifying and reporting on operation of a drone and shows further detail of the steps employed in identifying operation of a drone; and
Figure 3 is a schematic representation of a method of identifying and reporting on operation of a drone and shows further detail of the steps employed in reporting on operation of a drone.

### DETAILED DESCRIPTION

Methods of detecting drone operation using a mobile telecommunications network in accordance with embodiments of the present invention will now be described. For the sake of simplicity, embodiments comprising (terrestrial) base stations will be considered initially.

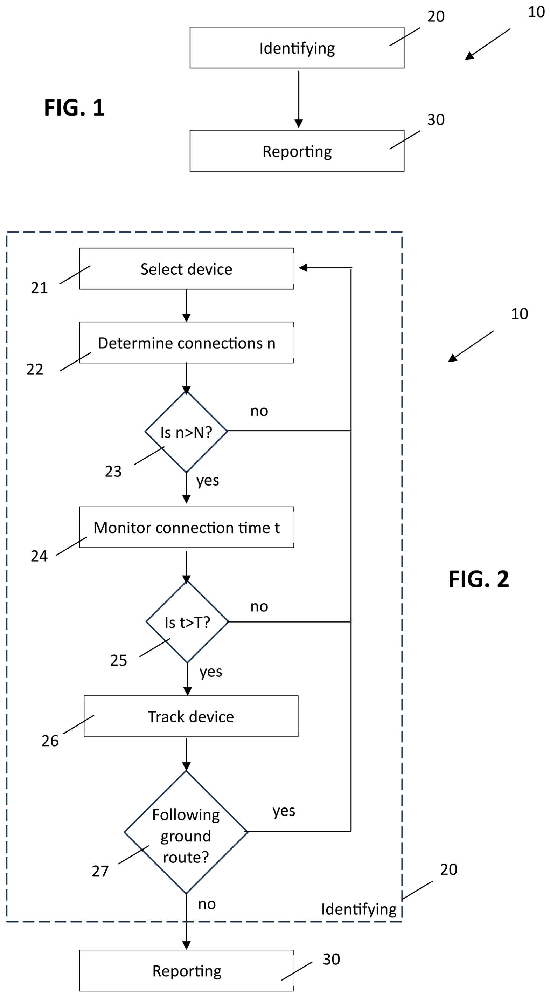

Figure 1 shows a method 10 of detecting and reporting on potential drone operation using a mobile telecommunications network. The method 10 comprises a detecting stage 20 followed by a reporting stage 30. The detecting stage 20 identifies potential drones and tracks them, while the reporting stage 30 gathers information on the potential drone and provides a report containing the information.

Any device provided with a SIM card will generally communicate with a relatively small number of base stations, depending on factors such as the number of nearby base stations within communication range and the local environment which may present obstructions to communication. Typically, the device will communicate simultaneously with 3 to 5 base stations. While communications are routed primarily through one base station, periodic communications with the other base stations in communication range are maintained, for example to determine if the device could be better served by switching to a different base station with improved signal strength.

This holds true also for a drone carrying a SIM card when the drone is on the ground. When the drone is switched on, the drone will connect to the telecommunications network and begin communicating with a relatively small number of base stations. However, when the drone takes to the sky, many or all the obstructions present for ground communications no longer affect line of sight communication with the base stations, and the drone will begin communicating simultaneously with a relatively large number of base stations. Typically, the drone will move from communicating simultaneously with 3 to 5 base stations to communicating with 10 or more base stations, and can communicate with as many as 20 or more base stations. Detecting a device communication with a relatively large number of base stations and, optionally, detecting such a transition may be used as an initial way to identify a potential drone within the detecting stage 20 of the method of Figure 1.

Figure 2 shows the detecting stage 20 in greater detail. As indicated at step 21, a device connected to the network is selected for analysis. At step 22, a determination is made of the number n of base stations to which the selected device is connected. At step 23, a comparison is made to see if the selected device is connected to more than a predefined number N of base stations, i.e. is n > N? In this embodiment, N is selected as 10, although other values could be used. As explained above, the selected device being connected to a relatively large number of base stations is indicative of the device being high enough to be free of ground obstructions and so potentially in flight. Hence, such a determination that n > N provides an initial indication that the device is a drone. If n ≤ N, the method 100 returns to step 21 where another connected device is selected. As a further check, the records kept for the selected device can be checked to see if the current connection started with an initial connection to a relatively small number of base stations and then transitioned to a connection to a relatively large number of base stations. If the transition is not seen, the method 100 may return to step 21 where another connected device is selected.

When the condition n > N is satisfied, the selected device is monitored at step 24 to see how long it maintains simultaneous communication with a relatively large number of base stations (n > N). For example, the time t that the condition n > N persists is monitored. It does not matter if the number of connections n changes as more or fewer connections are made or if n remains the same but connections to different base stations are formed as the potential drone moves around. The time t will increment all the time that n > N.

At step 25, a comparison is made to see if the elapsed time t exceeds a predefined period of time T, i.e. is t > T? In this embodiment, T is chosen to be 2 minutes, although other values could be chosen. This can help discriminate against detecting other types of device that can sometimes communicate with a large number of base stations. However, for other types of devices, communications with a large number of base stations is short lived. For example, a mobile phone carried by a person riding in an external glass lift (elevator) may connect to a larger number of base stations if the building is higher than neighbouring buildings, but these additional connections will soon be lost as the person enters the building if ascending or drops below the roofline of the neighbouring buildings if descending. If t ≤ T, the method 100 returns to step 21 where another connected device is selected.

Once an identification of a potential drone is confirmed at step 25 by determining that t > T, the method proceeds to step 26 where the selected device is tracked. This is achieved by periodically determining the position of the selected device. Each position may be determined in any standard way. Triangulation may be used, for example triangulation from the base station. The signal strengths recoded at each base station will be indicative of the distance to the selected device, and these distances may be triangulated relative to the base stations to provide a position of the selected device.

At step 27, the track of the selected device is compared to one or more ground maps of the selected device's location. A determination is made to see whether the selected device is following marked routes on the maps, for example roads, navigable waterways or paths. This may be achieved in any number of known ways. Artificial intelligence may be used to perform this step. If it is found that the selected device is following a ground route, the method 10 returns to step 21 where another connected device is selected. However, if it is found that the selected device is not following a recognised ground route, this is taken to confirm the identification of the selected device as a drone, and initiates the reporting stage 30 of method 10.

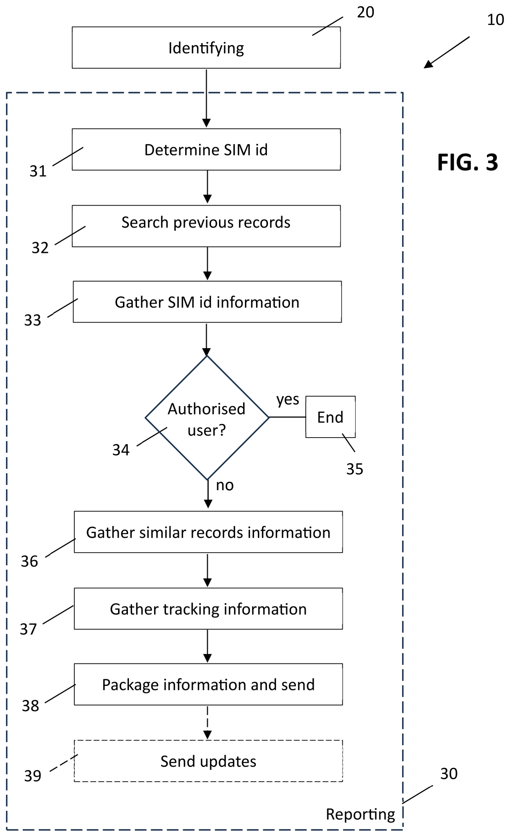

The reporting stage 30 is shown in greater detail in Figure 3, as implemented in an embodiment concerned only with detection of the operation of drones by unauthorised users. As can be seen, the reporting stage 30 starts at step 31 where the identify of the SIM card (the "SIM id") carried by the drone is found. To ensure privacy, devices connecting to a telecommunications network are assigned a temporary SIM id to ensure anonymity. In certain circumstances network providers are allowed to match the temporary SIM id to the actual SIM id of the connected device.

At step 32 the network provider conducts a search of records to look for information held in respect of the actual SIM id of the drone. Relevant information is gathered at step 33, such as the name and address of the person registered as the owner of the SIM card.

At step 34, the information about the registered user is checked to see whether it indicates that the registered user is authorised to conduct drone operations. If it is found that the registered user is authorised to conduct drone operations, the method 100 ends at step 35. However, if the user is not authorised to conduct drone operations, the reporting stage 30 continues to step 36.

In addition, information held in the network provider's records reflects radio traffic on the network associated with the actual SIM id. This may include connection times, the location of the SIM card during these connection times and the signal strengths, among other information. This information is then used to look for similar records held in respect of other actual SIM ids. For example, records indicating another actual SIM id was connected to the network at the same time and at the same locations as the drone was connected via its SIM card. At step 36, information from and associated with these similar records is gathered. For example, details of the connection times and locations can be provided for each matching actual SIM id, along with details of the owner of the other actual SIM id such as a name and address. In this way, incomplete data or incorrect information in one record can be supplemented with information from the other records. For example, if the record for the actual SIM id of the drone is missing a name and address of the registered owner of the SIM card, this information may be inferred from records of other SIM cards seen on the network at the same time and locations as the drone.

At step 37, the tracking information determined in step 26 is gathered and may be supplemented with more recent tracking information (i.e. tracking at step 26 may be continued during and after the determination at step 27 is made as regards whether the selected device is following known routes).

At step 38, the information gathered at steps 33, 36 and 37 is packaged as a report and sent to an interested party As it is unauthorised use of a drone that is of interest in this embodiment, the report may be sent to a police authority or a body responsible for enforcing only authorised use of drones.

Figure 3 shows optional step 39, where updated reports may be sent. For example, the updated reports may include updated tracking information and additional information gathered from newly identified similar records (which may be found as the drone flies to a new location).

A person skilled in the art will appreciate that the above embodiments may be varied in many different respects without departing from the scope of the present invention that is defined by the appended claims.

In the embodiment described above, at step 23, a comparison is made to see if the selected device is connected to more than 10 base stations (i.e. N = 10). As noted, other values for N could be used. Also, step 23 is describes as determining whether n > N. However, the comparison may alternatively determine whether n ≥ N. Similarly at step 24, a comparison is made to see if the selected device is connected for more than predefined 2 minutes (i.e. T = 2 minutes). As noted, other values for T could be used. Also, step 24 is describes as determining whether t > T. However, the comparison may alternatively determine whether t ≥ T.

The order of the steps within the identifying stage 20 and reporting stage 30 may be varied or some steps may be combined. For example, in identifying stage 20, steps 24 and 25 may be performed before steps 22 and 23. In reporting stage 30, step 37 may be performed before steps 32 to 36.

As noted above, the reporting stage 30 of Figure 3 relates to an embodiment concerned only with detection of the operation of drones by unauthorised users. However, other embodiments relate to other uses. For example, an alternative embodiment may be concerned only with monitoring authorised drone operations. Such monitoring may be used to record total flying times and locations where drones are operated, and may be used a check that operation of the drone remains within allowed limits or to allow a drone operator to be charged for use of their drone. In this case, there may be no wish to check whether the user is authorised or not, and so step 34 may be omitted. Alternatively, other embodiments may be concerned with both authorised and unauthorised drone use. In these embodiments, the check of whether the user is authorised or at step 34. The outcome of this step may determine to whom the report is sent at step 38 (and, optional, at step 39) and/or determine the contents of the report sent at step 38 (and, optional, at step 39).

The present invention may be implemented in telecommunications networks comprising (terrestrial) base stations and/or satellites. In the latter case, fewer simultaneous connections are expected. Typically, the device will communicate simultaneously with 1 to 4 satellites while on the ground. When the drone takes to the sky, the drone will begin communicating simultaneously with more base stations. Typically, the drone will move from communicating simultaneously with 1 to 4 satellites to communicating with 3 to 7 satellites. The overlap in numbers means that rather than using fixed threshold numbers of direct connections to determine a potential drone moving from the ground to flight, a threshold corresponding to an increase in the number of direct connections may be used. For example, an increase of at least 2, at least 3 or at least 4 direct connections may be used as an initial way to identify a potential drone within the detecting stage 20 of the method of Figure 1.

## Claims

1. A method of identifying a drone operating via a mobile telecommunications network, the method comprising:
determining the number of simultaneous direct connections between a mobile telecommunication device and different network transceivers;
comparing the determined number of connections with a threshold number of direct connections; and
if the determined number of number of connections is found to be greater than the threshold number of direct connections, identifying the mobile telecommunication device as a potential drone.

2. The method of claim 1, wherein the threshold number of direct connections corresponds to a number of direct connections expected for a connected device in flight.

3. The method of claim 2, wherein the network transceivers are base stations and, optionally, the threshold number of direct connections is any of 10, 15 or 20.

4. The method of claim 2, wherein the network transceivers are satellites and, optionally, the threshold number of direct connections is any of 3, 4 or 5.

5. The method of any preceding claim, further comprising:
monitoring the simultaneous direct connections of the potential drone to determine a connection time over which the number of connections remains greater than the threshold number of connections;
comparing the determined connections time with a threshold connection time; and
if the determined connection time is greater than the threshold connection time, confirming the identification of the mobile telecommunication device as a potential drone.

6. The method of claim 5, wherein the threshold connection time is any of 2 minutes, 5 minutes or 10 minutes.

7. The method of any preceding claim, further comprising:
tracking the potential drone to determine a location and path of the potential drone;
comparing the determined path with information recording known ground routes at the location of the potential drone to determine if the determined path follows one or more of the ground routes; and
if it is determined that the path does not follow one or more of the ground routes, confirming the identification of the mobile telecommunication device as a potential drone.

8. The method of claim 7, wherein:
the location is the region or area in which the potential drone is operating; and/or
the ground routes include road, footpaths and navigable waterways.

9. The method of claim 7 or 8, wherein:
tracking the potential drone comprises determining successive positions of the potential drone; and, optionally,
the successive positions are determined by triangulation from the network transceivers.

10. The method of any preceding claim, further comprising:
multiple steps of determining the number of simultaneous direct connections between the mobile telecommunication device and different network transceivers, and comparing the determined number of number of connections with a threshold number of connections; and
if the determined number of number of connections is found to be less than a further threshold number of connections at an earlier time and more than the threshold number of connections at a later time, identifying the mobile telecommunication device as a potential drone.

11. The method of any preceding claim, further comprising:
determining the identity of the potential drone, such as a SIM identity of a SIM card carried by the potential drone, from the potential drone's connection with the network;
gathering registered user information associated with the determined identity;
providing a report containing the registered user information associated with the determined identity; and, optionally,
using the registered user information to determine if the registered user is authorised to conduct drone operations and, if the registered user is not authorised to conduct drone operations, providing the report containing the registered user information associated with the determined identity.

12. The method of claim 11, further comprising:
searching records for network connection information associated with the determined identity, wherein the network connection information includes times and locations when potential drone previously connected to a telecommunications network; and
searching the records for network connection information associated with another identity indicating that a mobile telecommunication device associated with the another identity was connected to the telecommunications network at at least some of the same times and locations as when the potential drone was previously connected to the telecommunications network; and
gathering registered user information associated with the another identity; and
wherein providing the report comprises providing the report containing the registered user information associated with the determined identity and the registered user information associated with the another user.

13. The method of claim 11 or 12, further comprising:
adding the tracking information relating to the potential drone to the report and wherein providing the report comprises providing the report including the tracking information; and, optionally,
providing updated reports with updated tracking information.

14. A computer program comprising computer program instructions that, when executed by a computer system, cause the computer system to perform the method of any preceding claim, or a computer readable medium having stored thereon such a computer program.

15. A computer system programmed to perform the method of any of claims 1 to 13, or a telecommunications network comprising such a computer system.
